# EUROPÄISCHE PATENTSCHRIFT

(11) **EP 1 620 810 B1**
(45) Veröffentlichungstag und Bekanntmachung des Hinweises auf die Patenterteilung: **21.01.2015**
(21) Anmeldenummer: 04728179.5
(22) Anmeldetag: 19.04.2004
(51) Int. Cl.: G06F 17/30

(54) **VERFAHREN UND ANORDNUNG ZUR EINRICHTUNG UND AKTUALISIERUNG EINER BENUTZEROBERFL CHE ZUM ZUGRIFF AUF INFORMATIONSSEITEN IN EIN EM DATENNETZ**
METHOD AND ARRANGEMENT FOR ESTABLISHING AND UPDATING A USER SURFACE USED FOR ACCESSING DATA PAGES IN A DATA NETWORK
PROCEDE ET DISPOSITIF D'AGENCEMENT ET DE MISE A JOUR D'UNE INTERFACE D'UTILISATEUR POUR L'ACCES A DES PAGES D'INFORMATION DANS UN RESEAU DE DONNEES

(30) Priorität: 08.05.2003 DE 10320711
(43) Veröffentlichungstag der Anmeldung: 01.02.2006
(73) Patentinhaber: Unify GmbH & Co. KG, 81379 München (DE)
(72) Erfinder: PROVOOST, Bart, B-2590 Berlaar (BE)
(74) Vertreter: Fritzsche, Thomas
(86) Internationale Anmeldenummer: PCT/EP2004/004148
(87) Internationale Veröffentlichungsnummer: WO 2004/099963

(56) Entgegenhaltungen:
- US-B1- 6 256 639
- CHAKRABARTI S ET AL: "Using Memex to archive and mine community Web browsing experience" COMPUTER NETWORKS, ELSEVIER SCIENCE PUBLISHERS B.V., AMSTERDAM, NL, Bd. 33, Nr. 1-6, Juni 2000 (2000-06), Seiten 669-684, XP004304800 ISSN: 1389-1286

## Beschreibung

Die Erfindung betrifft ein Verfahren zur Einrichtung und Aktualisierung einer Benutzeroberfläche zum Zugriff auf Informationsseiten in einem Datennetz und eine Anordnung zur Ausführung des Verfahrens.

Auf Informationsseiten in einem Datennetz, insbesondere auf die Webseiten im Internet, wird von einem Benutzer zugegriffen, indem die Adresse der jeweiligen Informationsseite in einem Anzeigeprogramm ("Browser") eingegeben wird. Anhand der eingegebenen Adresse baut das Anzeigeprogramm eine Verbindung zu dem Web-Server auf, auf dem die betreffende Informationsseite gespeichert ist, und in Folge dessen wird die Informationsseite zu dem Computer des Benutzers übertragen, und ihr Inhalt wird dort mit Hilfe des Anzeigeprogramms angezeigt.

Auf einer angezeigten Informationsseite können sog. Links angeordnet sein. Links sind Anzeige-Elemente, durch die (andere) Informationsseiten referenziert sind und durch deren Bedienung diese Informationsseiten aufgerufen werden können, ohne dass die Adressen dieser (anderen) Informationsseiten wiederum manuell in das Anzeigeprogramm angegeben werden müssen.

Eine Alternative zur manuellen Adresseingabe zum Zugriff auf Informationsseiten ist die Benutzung einer sog. Suchmaschine. Eine Suchmaschine ist meist selber durch eine Informationsseite bedienbar und umfasst zumindest ein Eingabefeld für Suchbegriffe. Die Suchmaschine überprüft eine Anzahl (im Idealfall alle) Informationsseiten daraufhin, ob einige oder alle Suchbegriffe im Inhalt dieser Informationsseiten vorhanden sind. Die Suchmaschine bietet dem Benutzer als Suchergebnis eine Informationsseite an, auf der Links angeordnet sind, mit denen auf einige oder alle aufgefundenen Informationsseiten zugegriffen werden kann.

Ein weiterer Weg zum Zugriff auf Informationsseiten ist der Aufruf über eine spezielle Benutzeroberfläche, der sog. Portalseite. Eine Portalseite ist eine von einem Portal-Betreiber zur Verfügung gestellte Informationsseite, auf der eine Anzahl Links bereits vorhanden ist und von denen der Portal-Betreiber vermutet, dass diese für den Benutzer nützlich sein könnten. Dabei kann ein Betreiber auch für unterschiedliche Benutzer oder unterschiedliche Benutzergruppen verschiedene Portalseiten erstellen, die zumindest teilweise von dem Benutzer oder den Benutzern selbst umgestaltet werden können.

Der Zugriff auf Informationsseiten durch die Eingabe der jeweiligen Adresse durch den Benutzer ist mit dem Nachteil verbunden, dass der Benutzer in jedem Fall die richtige Adresse der gewünschten Informationsseite kennen muss. Dieses Problem wird teilweise dadurch gelöst, dass der Benutzer , wie zuvor beschrieben, eine Suchmaschine benutzen kann. Die Nutzung von Suchmaschinen ist jedoch mit dem Nachteil behaftet, dass nur solche Informationsseiten aufgefunden werden, in deren Inhalt genau diejenigen Begriffe verwendet werden, die der suchende Benutzer in das Eingabefeld der Suchmaschine eingetragen hat. Zwar ist es bei der Erstellung von Informationsseiten möglich, in einem nicht angezeigten Inhaltsbereich der Informationsseite, dem sog. HTML-Header, zusätzliche Schlüsselworte zu hinterlegen, die dann von den Suchmaschinen gefunden werden können, aber auch bei diesen Schlüsselworten muss die Übereinstimmung mit den Suchbegriffen gegeben sein, damit die betreffende Informationsseite aufgefunden werden kann.

Die beschriebenen Nachteile führen den Informationen suchenden Benutzer zur Nutzung einer der zuvor beschriebenen Portalseiten, die eine Anzahl relevanter Informationsseiten, beispielsweise zu einem bestimmten Themengebiet, anbietet.

Eine solche Suchmaschine ist beschrieben in CHAKRABARTI S ET AL: "Using Memex to archive and mine community Web browsing experience"

Dabei hat sich jedoch als nachteilig erwiesen, dass dabei nur solche Informationsseiten über Links zugreifbar sind, die zuvor schon durch den Anbieter der Portalseite vorausgewählt oder durch den Benutzer der Portalseite im Zuge einer nachträglichen Anpassung hinzugefügt wurden. Eine Portalseite führt den Benutzer also nur dann zur gewünschten Informationsseite und damit zu dem gesuchten Inhalt, wenn zuvor vom Betreiber der Portalseite oder von einem Benutzer geeignete Links eingerichtet wurden. Dabei ist die Zahl der einrichtbaren Links allein schon wegen der Übersichtlichkeit limitiert, so dass nicht relevante Links und solche Links, deren verknüpfte Informationsseite nicht mehr existiert ("dead links" oder "expired links"), entfernt werden müssen. Zudem werden gerade im Internet häufig neue und für den Benutzer potentiell wichtige Informationsseiten neu erstellt, die vom Betreiber der Portalseite regelmäßig erfasst, ausgewertet und - abhängig von ihrer Bedeutung - auf der Portalseite referenziert ("verlinkt") werden müssen. Der Aufwand und damit die Kosten für die Pflege einer Portalseite steigen somit proportional zu der Anzahl der angezeigten Links.

Kurz gesagt ist der Betrieb einer Portalseite also mit hohem und vorwiegend manuellem Aufwand verbunden, der zudem noch regelmäßig betrieben werden muss, um die Qualität der Portalseite zu bewahren.

Die Aufgabe der Erfindung ist es, ein Verfahren vorzuschlagen, mit dem der Aufwand zur Einrichtung und zur Aktualisierung einer Benutzeroberfläche zum Zugriff auf Informationsseiten verringert wird, und eine Anordnung vorzuschlagen, mit der die Benutzeroberfläche auf einfache Weise eingerichtet und aktualisiert werden kann.

Die Lösung dieser Aufgabe ist für das Verfahren durch die Merkmale des Patentanspruchs 1 und für die Anordnung durch die Merkmale des Patentanspruchs 16 gegeben.

Die Lösung sieht für das Verfahren vor, dass zu den Informationsseiten jeweils ein zugeordneter Inhalts-Datensatz erstellt wird, in dem Merkmale gespeichert sind, die den jeweiligen auf der Informationsseite gespeicherten Inhalt beschreiben. Zur Bestimmung der ausgewählten Informationsseiten wird ein Benutzer-Datensatz mit Merkmalen erstellt, durch die ein gesuchter Inhalt beschrieben ist. Die Inhalts-Datensätze werden jeweils mit dem Benutzer-Datensatz hinsichtlich des Grades der Übereinstimmung verglichen, und es werden solche Informationsseiten durch Anzeige-Elemente als ausgewählte Informationsseiten auf der Benutzeroberfläche angezeigt, bei denen der Grad der Übereinstimmung des jeweiligen Inhalts-Datensatzes mit dem Benutzer-Datensatz eine zuvor definierte Schwelle erreicht und / oder übertrifft. Dadurch wird erreicht, dass die Benutzeroberfläche solche Informationsseiten anzeigt, deren Inhalt für den Benutzer interessant ist.

Für die Anordnung sieht die Lösung vor, dass zu den Informationsseiten auf dem Web-Server jeweils ein Inhalts-Datensatz gespeichert ist, der den über die jeweilige Informationsseite zugreifbaren Inhalt beschreibt, dass der Inhalts-Datensatz durch den Portal-Server zugreifbar ist, dass auf dem Portal-Server ein Benutzer-Datensatz gespeichert ist, der einen vom Benutzer gesuchten Inhalt beschreibt, dass der Portal-Server eine Vergleichseinrichtung aufweist, die Inhalts-Datensätze mit dem Benutzer-Datensatz hinsichtlich des Grades der Übereinstimmung vergleicht, und dass der Portal-Server so ausgestaltet ist, dass solche Informationsseiten durch Elemente auf der Benutzeroberfläche angezeigt werden, bei denen das Vergleichsergebnis eine zuvor definierte minimale Übereinstimmung erreicht und / oder übertrifft. Eine solche Anordnung bietet dem Benutzer eine Benutzeroberfläche mit auf seine Bedürfnisse angepassten Informationsseiten an.

Das Verfahren ist durch die kennzeichnenden Merkmale der abhängigen Patentansprüche 2 bis 15 vorteilhaft ausgestaltet.

Wenn die ausgewählten Informationsseiten zyklisch hinsichtlich ihrer Zugreifbarkeit überprüft werden, und wenn in den Fällen, in denen eine der überprüften Informationsseiten nicht mehr zugreifbar ist, das Anzeige-Element dieser Informationsseite aus der Benutzeroberfläche entfernt wird, werden auf der Benutzeroberfläche keine inaktiven Links angezeigt.

Wenn der Vergleich in Zeitabständen wiederholt wird und anhand des Ergebnisses des wiederholten Vergleichs die Benutzeroberfläche aktualisiert wird, werden auch neu hinzugefügte Informationsseiten mit Inhalts-Datensätzen berücksichtigt.

Wenn der Benutzerdatensatz aktualisiert wird, nach der Aktualisierung der Vergleich neu ausgeführt wird, und wenn anhand des neuen Vergleichsergebnisses die ausgewählten Informationsseiten neu bestimmt werden, passt sich die Benutzeroberfläche geänderten Anforderungen des Benutzers an.

Auch neu eingeschaltete Portal-Server können eine große Menge Informationsseiten bei dem Vergleich berücksichtigen, wenn durch Abfrage einer Datenbank mit Inhalts-Datensätzen und / oder durch eine Suche Inhalts-Datensätze ermittelt und gespeichert werden, und wenn diese für den Vergleich mit dem Benutzer-Datensatz verwendet werden.

Die Datensätze sind besonders einfach auszuwerten, indem jeder Inhalts-Datensatz und der Benutzer-Datensatz jeweils als strukturiertes Dokument erstellt werden, und indem der Inhalts-Datensatz die Adresse der ihm zugeordneten Informationsseite umfasst. Dann ist die dem Inhalts-Datensatz entsprechende Informationsseite auch besonders leicht auffindbar.

Wenn jeder Inhalts-Datensatz und der Benutzer-Datensatz im XML-Format erstellt werden, und wenn die Struktur der Inhalts-Datensätze und des Benutzer-Datensatzes jeweils in einem Beschreibungsdatensatz festgelegt werden, wird ein allgemein bekanntes und leicht handhabbares Datenformat benutzt, wobei durch die Nutzung des Beschreibungsdatensatzes auch unterschiedlich strukturierte Datensätze miteinander verglichen werden können.

Vergleiche lassen sich besonders einfach durchführen, wenn für die Inhalts-Datensätze und den Benutzer-Datensatz jeweils die gleiche Struktur verwendet wird.

Für den Benutzer ergibt sich eine übersichtliche Darstellung, indem die bislang meistgenutzte ausgewählte Informationsseite an priorisierter Stelle auf der Benutzeroberfläche angezeigt wird.

Wenn die ausgewählte Informationsseite, deren zugeordneter Inhalts-Datensatz die beste Übereinstimmung mit dem Benutzer-Datensatz aufweist, an priorisierter Stelle auf der Benutzeroberfläche angezeigt wird, kann der Benutzer die mit der höchsten Wahrscheinlichkeit für ihn hilfreiche Information besonders einfach erlangen.

Wenn als die Informationsseiten Webseiten verwendet werden, die Webseiten anhand von diesen zugeordneten Adressen zugreifbar sind und wenn die Webseiten und die Inhalts-Datensätze auf zumindest einem Web-Server gespeichert werden, und wenn die Inhalts-Datensätze anhand diesen jeweils zugeordneten Datensatz-Adressen abgerufen werden, kann das Verfahren vorteilhaft im Internet oder in solchen Datennetzen, die dem Internet ähnlich sind, verwendet werden.

Dem Benutzer wird eine vertraute Arbeitsweise ermöglicht, indem als die Benutzeroberfläche eine als Portalseite ausgeführte Informationsseite verwendet wird, und indem die Portalseite von einem Portal-Server bereitgestellt wird.

Wenn in dem Datennetz ein Proxy-Server eingesetzt wird, der Proxy-Server die Informationsseiten, deren zugeordnete Adressen zu ihm übertragen werden, einliest, und der Proxy-Server die eingelesenen Informationsseiten zwischenspeichert und zu dem Benutzer übermittelt, dann ist der Zugriff auf häufig benötigte Informationsseiten besonders effektiv.

Der Zugriff auf aufgefundene Informationsseiten ist besonders einfach, wenn die Anzeige-Elemente der ausgewählten Informationsseiten jeweils als Link ausgeführt sind, der mit der Adresse der jeweiligen ausgewählten Informationsseite verknüpft ist, bei Zugriff auf den Link die Adresse der zugehörigen Informationsseite zu dem Proxy-Server übertragen wird, und der Proxy-Server diese Informationsseite lädt und zu dem Benutzer übermittelt.

Wenn bei der Übertragung der Informationsseite zu dem ProxyServer die Datensatz-Adresse des dieser Informationsseite zugeordneten Inhalts-Datensatzes ebenfalls zu dem Proxy-Server übertragen wird, der Proxy-Server diese Datensatz-Adresse zu der Benutzeroberfläche überträgt, und wenn von der Benutzeroberfläche der dieser Datensatz-Adresse zugeordnete Inhalts-Datensatz geladen und für den Vergleich gespeichert wird, wächst die Menge der zum Vergleich nutzbaren Inhalts-Datensätze und damit die Wahrscheinlichkeit von Vergleichsergebnissen mit einem hohen Grad der Übereinstimmung.

Ausführungsbeispiele des erfindungsgemäßen Verfahrens sind nachfolgend anhand der Zeichnungen erläutert und dienen gleichzeitig der Erläuterung eines Ausführungsbeispiels der erfindungsgemäßen Anordnung.

Dabei zeigt:
- Figur 1: in schematischer Darstellung eine Anordnung zur Anzeige einer Portalseite, in der ein Portal-Server mit Informationen über Informationsseiten versorgt wird, und
- Figur 2: in schematischer Darstellung die Anordnung, mit der Informationen über Informationsseiten zur Erstellung der Portalseite ausgewertet werden.

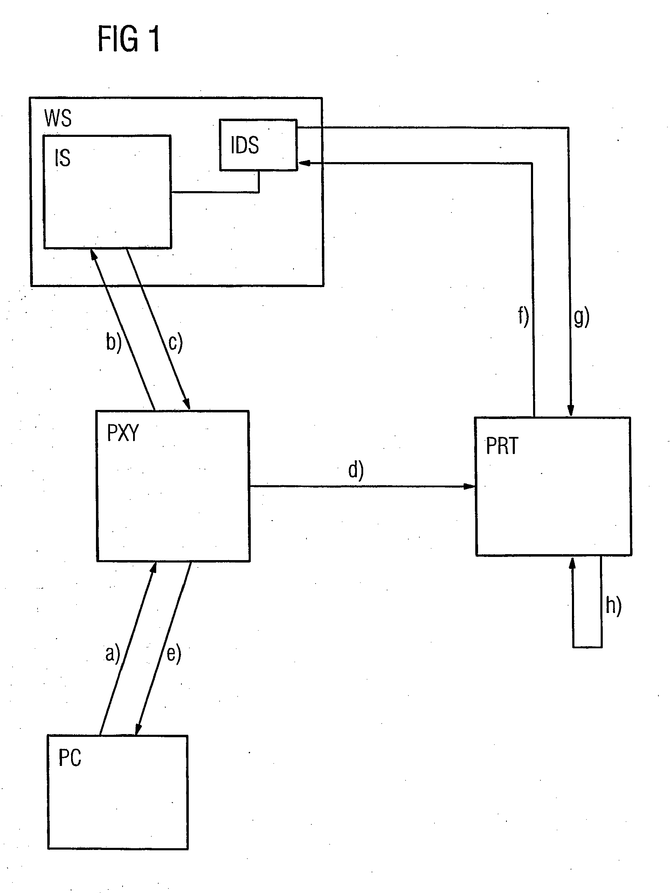

In der Figur 1 sind Komponenten eines (hier nicht vollständig dargestellten) Datennetzes gezeigt, die über das Datennetz Informationen miteinander austauschen können. Dabei ist ein Computer PC vorhanden, der mit einem Anzeigeprogramm für Informationsseiten, einem sog. Web-Browser, ausgestattet ist. Der Web-Server WS dient der Speicherung von Informationsseiten IS und gleichzeitig der Speicherung von Inhalts-Datensätzen IDS, die den Informationsseiten IS jeweils zugeordnet sind. Das Bindeglied zwischen dem Web-Server WS und dem Computer PC stellt der Proxy-Server PXY dar, der die Informationsseiten IS, die vom Web-Browser des Computers PC vom Web-Server WS angefordert werden, von dem Web-Server lädt, zwischenspeichert und zu dem Computer PC weiterleitet. Schließlich ist in dem Datennetz ein Portal-Server PRT angeordnet, der als Benutzeroberfläche für den Benutzer des Computers PC spezielle Informationsseiten erstellt oder bereit hält und zu dem Computer PC übermittelt. Die Pfeile zwischen den einzelnen Komponenten symbolisieren Anforderungs- und Antwortmeldungen, die zwischen den Komponenten ausgetauscht werden und anhand derer die Ausführungsbeispiele im Folgenden erläutert werden. Die Pfeile sind dazu mit Buchstaben a) ... p) gekennzeichnet.

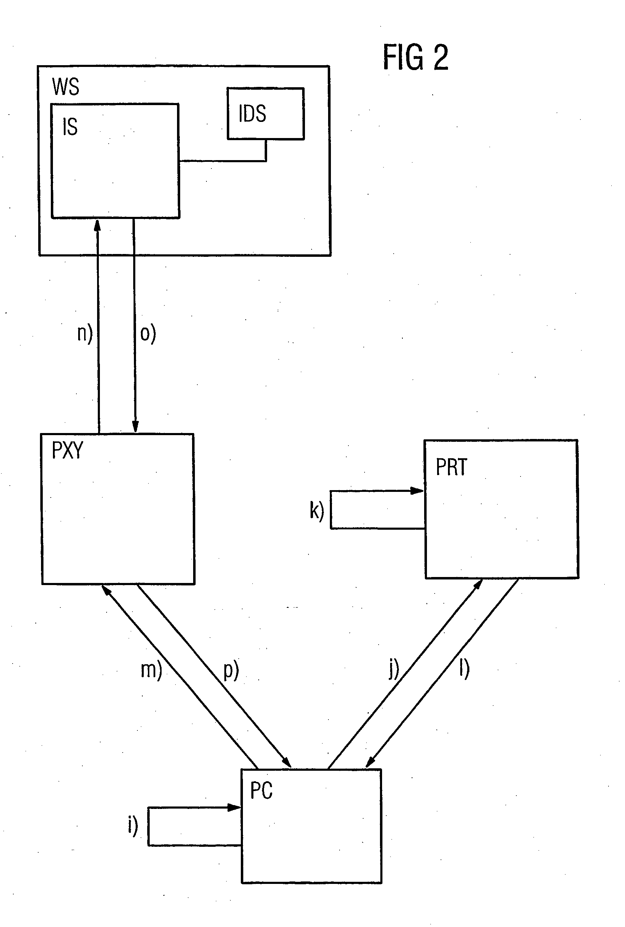

In dem Datennetz können alle Komponenten selbstverständlich auch mehrfach vorhanden sein; insbesondere sind auch in kleineren Datennetzen eine Vielzahl Informationsseiten IS, mehrere Computer PC und Benutzer vorhanden. Aus Gründen der Übersichtlichkeit sind jedoch alle Komponenten in den Figuren 1 und 2 nur in der Einzahl dargestellt.

Der Web-Server WS, der Proxy-Server PXY und der Portal-Server PRT sind hier jeweils eigenständige Geräte;, selbstverständlich können sie aber auch als logische Instanzen gemeinsam auf einer Hardware installiert sein.

Im Datenspeicher des Web-Servers WS sind als Informationsseiten IS Web-Seiten gespeichert, die hier im HTML-Format (HTML = hypertext markup language) vorliegen und in denen verschiedenste Inhalte gespeichert sind. In einem für den Benutzer nicht anzuzeigenden Datenbereich ("HTTP-Header") einer Informationsseite IS ist die Adresse des dieser Informationsseite IS zugeordneten Inhalts-Datensatzes IDS gespeichert. Dieser Inhalts-Datensatz IDS (auch "wsmid" = "web side meta information document" genannt) ist im vorliegenden Beispiel auf dem gleichen Web-Server WS wie die zugeordnete Informationsseite IS gespeichert; selbstverständlich kann die Speicherung auch auf einer anderen adressierbaren Komponente des Datennetzes erfolgen. Der Inhalts-Datensatz IDS wird von dem Ersteller der Informationsseite IS im XML-Format (XML = extensible markup language) erstellt, wobei die Struktur dieses Inhalts-Datensatzes, also Angaben über die in diesem Inhalt-Datensatz IDS erteilten Datenfelder in einem Beschreibungsdatensatz niedergelegt wird, der ebenfalls auf dem Web-Server WS abgespeichert wird. Solche Beschreibungsdatensätze sind für die XML-Dokumente auch als DTD (document type definition) bekannt; er wird hier entsprechend auch als "wsmid - DTD" bezeichnet.

Im vorliegenden Fall ist der Inhalts-Datensatz durch den Ersteller der Informationsseite IS erstellt worden. Dadurch ist eine hohe Wahrscheinlichkeit gegeben, dass der Inhalts-Datensatz den Inhalt der Informationsseite IS präzise beschreibt. Der Inhalts-Datensatz kann alternativ aber auch von einer dritten Instanz erstellt werden, beispielsweise von einem darauf spezialisierten Dienstleister oder von einer automatischen Einrichtung, die speziell für diese Aufgabe programmiert ist.

Der Portal-Server PRT weist eine Datenbank auf, in der Kopien von Inhalts-Datensätzen IDS gespeichert werden. Diese Kopien der Inhalts-Datensätze IDS werden, wie später ausführlich beschrieben, mit einem anderen Datensatz, dem Benutzer-Datensatz verglichen, um die Benutzeroberfläche für den Benutzer zu gestalten. Die Datenbank des Portal-Servers PRT wird dazu im laufenden Betrieb des Datennetzes mit eben diesen Kopien der Inhalts-Datensätze IDS versorgt. Dieser Vorgang wird im Folgenden anhand der Figur 1 beschrieben.

Das auf dem Computer PC installierte Anzeigeprogramm dient dazu, um Informationsseiten IDS, die auf dem Web-Server WS gespeichert sind, zu laden und anzuzeigen. Dazu übermittelt das Anzeigeprogramm und damit der Computer PC zu dem Proxy-Server PXY eine Abfragenachricht A, die die Adresse der gewünschten Informationsseite IS umfasst. Der Proxy-Server PXY überprüft daraufhin, ob diese gewünschte Informationsseite IS bereits in seinem internen Speicher (Cache) gespeichert ist und, falls ja, ob das "Verfallsdatum" dieser Kopie noch nicht erreicht ist. Im vorliegenden Beispiel liegt noch keine Kopie der Informationsseite IS im Cache-Speicher des Proxy-Servers PXY vor, so dass dieser eine zur Nachricht a) ähnliche Abfragenachricht b) zu dem Web-Server WS verschickt, um die betreffende Informationsseite IS abzurufen. Der Web-Server WS antwortet dem Proxy-Server PXY mit einer Antwortnachricht c), die die gewünschte Informationsseite IS umfasst. Wie bereits erläutert, umfasst der Header der Informationsseite IS die Adressangabe des dieser Informationsseite IS zugeordneten Inhalts-Datensatzes IDS. Der Inhalts-Datensatz IDS umfasst dabei seinerseits die Adresse der ihm zugeordneten Informationsseite IS. Der Proxy-Server PXY übermittelt nun in einer Nachricht d) die Adresse des Inhaltsdatensatzes IDS zu dem Portal-Server PRT; der Inhalt der Informationsseite IS selbst wird dabei jedoch nicht zu dem Portal-Server PRT übermittelt. Zur Übermittlung der Adresse des Inhaltsdatensatzes IDS wird ein für diesen Zweck reservierter Informations-Kanal verwendet. In Datennetzen mit mehreren Portal-Servern PRT kann die Adresse des Inhalts-Datensatzes an mehrere oder alle Portal-Server PRT versendet werden. Der Proxy-Server PXY übermittelt nun die von dem Web-Server geladene Informationsseite IS in einer Antwortnachricht e) zu dem Computer PC, wo diese Seite von dem dort installierten Anzeigeprogramm dargestellt wird.

Nach Empfang der Nachricht d) überprüft der Portal-Server PRT, ob der Inhaltsdatensatz mit der übermittelten Datensatz-adresse bereits in seiner Datenbank abgespeichert ist. Dies ist in dem vorliegenden Beispiel noch nicht der Fall, so dass der Portal-Server PRT eine Abfragenachricht f) mit der Adresse des Inhalts-Datensatzes IDS generiert und zu dem Web-Server WS übermittelt. Dieser übermittelt in einer Antwortnachricht g) den Inhaltsdatensatz IDS zu dem Portal-Server PRT, der die mit dieser Nachricht g) empfangenen Informationen in einem Verarbeitungsprozess h) auswertet. Dabei wird der empfangene Inhalts-Datensatz IDS so aufbereitet, dass die in ihm enthaltenen Datenfelder in der Datenbank des Portal-Servers PRT als suchbare Objekte abgelegt werden. Dabei hilft die Beschreibung der Struktur des Inhalts-Datensatzes IDS, die in Form des wsmid - DTDs ebenfalls von dem Web-Server WS in der Antwortnachricht g) zu dem Portal-Server PRT übermittelt wurde.

Da, wie Eingangs erwähnt, in einem erfindungsgemäßen Datennetz eine Vielzahl Informationsseiten IS gespeichert und verwendet werden, wird die Datenbank des Portal-Servers PRT im laufenden Betrieb mit einer wachsenden Anzahl Inhalts-Datensätzen IDS gefüllt, bis - im Idealfall - die Inhaltsdatensätze IDS aller Informationsseiten IS gespeichert sind, sofern überhaupt zu jeder Informationsseite IS auch ein Inhalts-Datensatz IDS besteht.

Um den Benutzer des Computers PC einen übersichtlichen Zugriff auf eine begrenzte Anzahl Informationsseiten IS zu bieten, wird zur Anzeige auf dem Anzeigeprogramm eine für ihn angepasste Benutzeroberfläche, eine sog. Portal-Seite, erstellt, und zur Anzeige gebracht. Dieser Vorgang ist in der Figur 2 schematisch dargestellt und wird anhand dieser Figur im Folgenden erläutert.

Der Benutzer des Computers PC aktiviert in dem Anzeigeprogramm einen Befehl zur Anzeige einer Portal-Seite als Benutzeroberfläche. Das Anzeigeprogramm stellt durch kurzen Datenaustausch mit dem Portal-Server PRT fest, ob dort eine für diesen Benutzer vorgesehene Portal-Seite gespeichert ist. Diese ist in dem vorliegenden Beispiel nicht der Fall, so dass das Anzeigeprogramm den Benutzer auffordert, Informationen über den gewünschten und auf der neu zu erstellenden Portalseite zur Auswahl darzustellenden Inhalt einzugeben. Das kann der Benutzer beispielsweise durch Aktivieren von Auswahlmenüs oder aber durch Texteingaben bewerkstelligen. Das Anzeigeprogramm erstellt aus diesen Angaben einen Benutzer-Datensatz, der hier ebenfalls im XML-Format gespeichert ist und der ebenfalls einen zugeordneten Beschreibungsdatensatz (DTD) hat. Im vorliegenden Beispiel ist der Beschreibungsdatensatz, der dem Benutzer-Datensatz zugeordnet ist, identisch mit dem Beschreibungsdatensatz wsmid - DTD der Inhalts-Datensätze IDS; selbstverständlich können diese Beschreibungsdatensätze jedoch auch voneinander abweichen.

Der Benutzer-Datensatz umfasst nun in Form von Schlüsselworten verschiedene Präferenzen des Benutzers, beilspielsweise die Sprache oder die Sprachen, in der die anzuzeigenden Informationsseiten IS abgefasst sein können, Schlagworte, die in dem Titel oder dem Inhalt der Informationsseiten IS vorhanden sein müssen und ebenso solche, die nicht vorhanden sein dürfen, usw.. Dabei sind abhängig von den Eingaben des Benutzers einige oder alle Felder des Benutzer-Datensatzes mit Inhalt gefüllt. Der Benutzer-Datensatz wird nun von dem Computer PC in einer Abfragenachricht j) zu dem Portal-Server PRT übertragen, wo dieser bzw. die in diesem enthaltenen Datenfelder mit den Datenfeldern der Inhalts-Datensätze IDS verglichen werden, die in der Datenbank des Portal-Servers PRT gespeichert sind. Aus den Vergleichsergebnissen ergibt sich eine Trefferliste, die in unterschiedlicher Weise sortiert werden kann, beispielsweise nach dem Grad der Übereinstimmung aller Datenfelder, nach der statistisch häufigsten Verwendung der jeweiligen Informationsseiten, Alter der Informationsseite IS, usw.. Anhand dieser Trefferliste generiert der Portal-Server nun eine spezielle Informationsseite, nämlich die Portal-Seite. Da die Portal-Seite bei jeder Anforderung neu zusammengestellt wird, spricht man auch von "dynamischer Generierung". Diese Portal-Seite umfasst zu jedem erfolgreichen Vergleich nun einen Link zu der jeweils aufgefundenen Informationsseite IS. Die Portal-Seite wird nun in einer Antwortnachricht e) von dem Portal-Server PRT zu dem Computer PT übertragen, wo sie mit Hilfe des Anzeigeprogramms angezeigt wird. Die auf der Portal-Seite dargestellten Links sind jeweils mit dem Titel der jeweiligen Informationsseite IS versehen, so dass der Benutzer nun aus den angezeigten Titeln eine oder mehrere der dargestellten Informationsseiten IS auswählt und anklickt.

Der Computer PC versendet nun anhand der angeklickten Links eine Abfragenachricht n), die die Adresse der gewünschten Informationsseite IS umfasst, zu dem Proxy-Server PXY. Der Proxy-Server PXY leitet wiederum die Adresse in einer weiteren Abfragenachricht n) zu dem Web-Server WS weiter, der in einer Antwortnachricht o) die angeforderte Informationsseite IS zu dem Proxy-Server PXY übermittelt, wobei dieser die Informationsseite IS seinerseits in der Antwortnachricht p) zu dem Computer PC übermittelt. Das Anzeigeprogramm auf dem Computer PC stellt nun diese Informationsseite IS dem Benutzer dar.

Wenn eine der Informationsseiten IS von dem Web-Server WS gelöscht oder wesentlich verändert wird, ändert sich zunächst nicht automatisch der Inhalt der Datenbank des Portal-Servers PRT. Dies kann dazu führen, dass dem Benutzer eine Portalseite mit nicht korrektem Inhalt präsentiert wird. Aus diesem Grund werden die Inhalts-Datensätze IDS nach Ablauf einer voreinstellbaren Verfallsdauer aus der Datenbank gelöscht. Alternativ kann nach Ablauf der Verfallsdauer auch eine - hier nicht dargestellte - Verbindung von dem Portal-Server PRT zu dem Web-Server WS aufgebaut werden, innerhalb derer der betreffende Inhalt-Datensatz IDS neu zu dem Portal-Server übertragen wird. Änderungen des Inhalts-Datensatzes IDS werden dabei in die Datenbank des Portal-Servers PRT eingepflegt, oder, sofern die betreffende Informationsseite IS und der damit verbundenen Inhalts-Datensatz IDS gelöscht ist, es kann der betreffende Datensatz dabei auch aus der Datenbank gelöscht werden. Solche Überprüfungen der Datenbank und der darin abgespeicherten Inhalts-Datensätze IDS finden bevorzugt zu lastarmen Betriebszeiten des Datennetzes statt.

Wenn der Benutzer mit Hilfe des Anzeigeprogramms seines Computers PC "seine" Portal-Seite anfordert, überprüft das Anzeigeprogramm, wie oben beschrieben, ob bereits auf dem Portal-Server PRT eine solche Portalseite für den Benutzer vorgespeichert ist. Falls dem nicht so ist, wird diese Portalseite neu erstellt anhand des Benutzerdatensatzes, der im Zuge der Neuerstellung von dem Benutzer eingegeben wird. Falls jedoch eine Portalseite bereits vorhanden ist, bekommt der Benutzer an dieser Stelle die Möglichkeit angeboten, den voreingespeicherten Benutzer-Datensatz zu aktualisieren, woraufhin die Portalseite gemäß des vorstehend beschriebenen Verfahrens neu aufgebaut wird. Dabei kann der Benutzer entscheiden, ob die bislang vorhandenen Links erhalten bleiben oder aber gelöscht werden.

## Patentansprüche

1. Verfahren zur Einrichtung und Aktualisierung einer Benutzeroberfläche zum Zugriff auf Informationsseiten (IS) in einem Datennetz durch einen Benutzer,
wobei ausgewählte Informationsseiten (IS) jeweils durch ein Anzeige-Element auf der Benutzeroberfläche dem Benutzer zum Zugriff angeboten werden und der Zugriff auf die Informationsseiten (IS) jeweils durch den Zugriff auf das jeweilige Anzeige-Element erfolgt, und
wobei auf den Informationsseiten (IS) Inhalte gespeichert sind,
**dadurch gekennzeichnet,**
- **dass** zu den Informationsseiten (IS) jeweils ein zugeordneter Inhalts-Datensatz (IDS) erstellt wird, in dem Merkmale gespeichert sind, die den jeweiligen auf der Informationsseite (IS) gespeicherten Inhalt beschreiben,
- **dass** zur Bestimmung der ausgewählten Informationsseiten (IS) ein Benutzer-Datensatz mit Merkmalen erstellt wird, durch die ein gesuchter Inhalt beschrieben ist,
- **dass** die Inhalts-Datensätze (IDS) jeweils mit dem Benutzer-Datensatz hinsichtlich des Grades der Übereinstimmung verglichen werden, und
- **dass** solche Informationsseiten (IS) durch Anzeige-Elemente als ausgewählte Informationsseiten (IS) auf der Benutzeroberfläche angezeigt werden, bei denen der Grad der Übereinstimmung des jeweiligen Inhalts-Datensatzes (IDS) mit dem Benutzer-Datensatz eine zuvor definierte Schwelle erreicht und / oder übertrifft.

2. Verfahren nach Patentanspruch 1,
**dadurch gekennzeichnet,**
**dass** die ausgewählten Informationsseiten (IS) zyklisch hinsichtlich ihrer Zugreifbarkeit überprüft werden, und
**dass** in den Fällen, in denen eine der überprüften Informationsseiten nicht mehr zugreifbar ist, das Anzeige-Element dieser Informationsseite (IS) aus der Benutzeroberfläche entfernt wird.

3. Verfahren nach einem der vorhergehenden Patentansprüche,
**dadurch gekennzeichnet,**
**dass** der Vergleich in Zeitabständen wiederholt wird, und dass anhand des Ergebnisses des wiederholten Vergleich die Benutzeroberfläche aktualisiert wird.

4. Verfahren nach einem der vorhergehenden Patentansprüche,
**dadurch gekennzeichnet,**
**dass** der Benutzerdatensatz aktualisiert wird,
**dass** nach der Aktualisierung der Vergleich neu ausgeführt wird, und
**dass** anhand des neuen Vergleichsergebnisses die ausgewählten Informationsseiten neu bestimmt werden.

5. Verfahren nach einem der vorhergehenden Patentansprüche,
**dadurch gekennzeichnet,**
**dass** durch Abfrage einer Datenbank mit Inhalts-Datensätzen (IDS) und / oder durch eine Suche Inhalts-Datensätze ermittelt und gespeichert werden, und
**dass** diese für den Vergleich mit dem Benutzer-Datensatz verwendet werden.

6. Verfahren nach einem der vorhergehenden Patentansprüche,
**dadurch gekennzeichnet,**
**dass** jeder Inhalts-Datensatz (IDS) und der Benutzer-Datensatz jeweils als strukturiertes Dokument erstellt werden, und dass der Inhalts-Datensatz (IDS) die Adresse der ihm zugeordneten Informationsseite (IS) umfasst.

7. Verfahren nach Patentanspruch 6,
**dadurch gekennzeichnet,**
**dass** jeder Inhalts-Datensatz (IDS) und der Benutzer-Datensatz im XML-Format erstellt werden, und
**dass** die Struktur der Inhalts-Datensätze (IDS) und des Benutzer-Datensatzes jeweils in einem Beschreibungsdatensatz festgelegt werden.

8. Verfahren nach einem der Patentansprüche 6 oder 7,
**dadurch gekennzeichnet,**
**dass** für die Inhalts-Datensätze (IDS) und den Benutzer-Datensatz jeweils die gleiche Struktur verwendet wird.

9. Verfahren nach einem der vorhergehenden Patentansprüche,
**dadurch gekennzeichnet,**
**dass** die bislang meistgenutzte ausgewählte Informationsseite (IS) an priorisierter Stelle auf der Benutzeroberfläche angezeigt wird.

10. Verfahren nach einem der vorhergehenden Patentansprüche,
**dadurch gekennzeichnet,**
**dass** die ausgewählte Informationsseite (IS), deren zugeordneter Inhalts-Datensatz (IDS) die beste Übereinstimmung mit dem Benutzer-Datensatz aufweist, an priorisierter Stelle auf der Benutzeroberfläche angezeigt wird.

11. Verfahren nach einem der vorhergehenden Patentansprüche,
**dadurch gekennzeichnet,**
**dass** als die Informationsseiten (IS) Webseiten verwendet werden,
**dass** die Webseiten anhand von diesen zugeordneten Adressen zugreifbar sind,
**dass** die Webseiten und die Inhalts-Datensätze (IDS) auf zumindest einem Web-Server (WS) gespeichert werden, und
**dass** die Inhalts-Datensätze (IDS) anhand diesen jeweils zugeordneten Datensatz-Adressen abgerufen werden.

12. Verfahren nach einem der vorhergehenden Patentansprüche,
**dadurch gekennzeichnet,**
**dass** als die Benutzeroberfläche eine als Portalseite ausgeführte Informationsseite verwendet wird, und
**dass** die Portalseite von einem Portal-Server (PRT) bereitgestellt wird.

13. Verfahren nach einem der vorhergehenden Patentansprüche,
**dadurch gekennzeichnet,**
**dass** in dem Datennetz ein Proxy-Server (PXY) eingesetzt wird, dass der Proxy-Server (PXY) die Informationsseiten (IS), deren zugeordnete Adressen zu ihm übertragen werden, einliest, und
**dass** der Proxy-Server (PXY) die eingelesenen Informationsseiten (IS) zwischenspeichert und zu dem Benutzer übermittelt.

14. Verfahren nach Patentanspruch 13,
**dadurch gekennzeichnet,**
**dass** die Anzeige-Elemente der ausgewählten Informationsseiten (IS) jeweils als Link ausgeführt sind, der mit der Adresse der jeweiligen ausgewählten Informationsseite (IS) verknüpft ist,
**dass** bei Zugriff auf den Link die Adresse der zugehörigen Informationsseite (IS) zu dem Proxy-Server (PXY) übertragen wird, und
**dass** der Proxy-Server (PXY) diese Informationsseite (IS) lädt und zu dem Benutzer übermittelt.

15. Verfahren nach Patentanspruch 14,
**dadurch gekennzeichnet,**
**dass** bei der Übertragung der Informationsseite (IS) zu dem Proxy-Server (PXY) die Datensatz-Adresse des dieser Informationsseite (IS) zugeordneten Inhalts-Datensatzes (IDS) ebenfalls zu dem Proxy-Server (PXY) übertragen wird,
**dass** der Proxy-Server (PXY) diese Datensatz-Adresse zu der Benutzeroberfläche überträgt,
**dass** von der Benutzeroberfläche der dieser Datensatz-Adresse zugeordnete Inhalts-Datensatz (IDS) geladen und für den Vergleich gespeichert wird.

16. Anordnung zur Einrichtung und Aktualisierung einer Benutzeroberfläche zum Zugriff auf Informationsseiten (IS) in einem Datennetz durch einen Benutzer, wobei
- auf der Benutzeroberfläche Elemente zum Zugriff auf die Informationsseiten (IS) angeordnet sind,
- in dem Datennetz ein Portal-Server (PRT) zur Verwaltung der Benutzeroberfläche angeordnet ist,
- über die Informationsseiten (IS) jeweils auf einen Inhalt zugriffen werden kann, und die Informationsseiten auf einem Web-Server (WS) gespeichert sind,
- in dem Datennetz ein Proxy-Server (PXY) angeordnet ist, der die über die Elemente der Benutzeroberfläche zugegriffenen Informationsseiten von dem Web-Server (WS) lädt und diese zu dem Benutzer übermittelt,
**dadurch gekennzeichnet, dass**
- zu den Informationsseiten (IS) auf dem Web-Server (WS) jeweils ein Inhalts-Datensatz (IDS) gespeichert ist, der den über die jeweilige Informationsseite (IS) zugreifbaren Inhalt beschreibt,
- dass der Inhalts-Datensatz (IDS) durch den Portal-Server (PRT) zugreifbar ist,
- dass auf dem Portal-Server (PRT) ein Benutzer-Datensatz gespeichert ist, der einen vom Benutzer gesuchten Inhalt beschreibt,
- dass der Portal-Server (PRT) eine Vergleichseinrichtung aufweist, die Inhalts-Datensätze (IDS) mit dem Benutzer-Datensatz hinsichtlich des Grades der Übereinstimmung vergleicht, und
- dass der Portal-Server (PRT) so ausgestaltet ist, dass solche Informationsseiten (IS) durch Elemente auf der Benutzeroberfläche angezeigt werden, bei denen das Vergleichsergebnis eine zuvor definierte minimale Übereinstimmung erreicht und / oder übertrifft.

## Claims

1. A method for establishing and updating a user interface allowing data pages (IS) in a data network to be accessed by a user, with selected data pages (IS) being made accessible to the user by a display element on the user interface and access to the data pages (IS) being effected by access to the respective display element, and with contents being stored on the data pages (IS), wherein
- an allocated content dataset (IDS) storing characteristics that describe the respective content stored on the data page (IS) is created for each of the data pages (IS),
- to determine the selected data pages (IS) a user dataset is created with characteristics that describe a searched content,
- the content datasets (IDS) are compared with the user dataset in regard to their degree of correspondence, and
- display elements display those data pages (IS) on the user interface as selected data pages (IS) in which the degree of correspondence of the respective content dataset (IDS) with the user dataset reaches and/or exceeds a predefined threshold.

2. The method of claim 1 wherein the selected data pages (IS) are checked cyclically in regard to their accessibility and should one of the checked data pages be no longer accessible the display element of that data page (IS) is removed from the user interface.

3. The method of any one of the preceding claims wherein the comparison is repeated at intervals and the user interface is updated according to the result of the comparison.

4. The method of any one of the preceding claims wherein the user dataset is updated, the comparison is repeated after the update and the selected data pages are determined again according to the result of the new comparison.

5. The method of any one of the preceding claims wherein content datasets which are used for the comparison with the user dataset are identified and stored by polling a database which has content datasets (IDS) and / or by searching.

6. The method of any one of the preceding claims wherein each content dataset (IDS) and the user dataset are created as a structured document, and the content dataset (IDS) comprises the address of the data page (IS) associated with it.

7. The method of claim 6 wherein each content dataset (IDS) and the user dataset are created in XML format, and the structures of the content datasets (IDS) and of the user dataset are defined in a description dataset.

8. The method of either of claims 6 or 7 wherein the same structure is used for the content datasets (IDS) and for the user dataset.

9. The method of any one of the preceding claims wherein the hitherto most-used selected data page (IS) is displayed at a prioritised position on the user interface.

10. The method of any one of the preceding claims wherein the selected data page (IS) whose allocated content dataset (IDS) exhibits the best correspondence with the user dataset is displayed at a prioritised position on the user interface.

11. The method of any one of the preceding claims wherein websites are used as the data pages (IS), the websites can be accessed by addresses associated with them, the websites and the content datasets (IDS) are stored on at least one web server (WS) and the content datasets (IDS) are retrieved with these respectively allocated dataset addresses.

12. The method of any one of the preceding claims wherein a data page configured as a portal site is used as the user interface and the portal site is provided by a portal server (PRT).

13. The method of any one of the preceding claims wherein a proxy server (PXY) is used in the data network, the proxy server (PXY) uploads the data pages (IS) whose associated addresses are transmitted to it, and the proxy server (PXY) buffers the uploaded data pages (IS) and transmits them to the user.

14. The method of claim 13 wherein the display elements of the selected data pages (IS) are each configured as a link which is linked to the address of the respective selected data page (IS), when the link is accessed the address of the associated data page (IS) is sent to the proxy server (PXY), and the proxy server (PXY) loads this data page (IS) and transmits it to the user.

15. The method of claim 14 wherein, when the data page (IS) is transmitted to the proxy server (PXY), the dataset address of the content dataset (IDS) that is associated with that data page (IS) is also transmitted to the proxy server (PXY), the proxy server (PXY) transmits this dataset address to the user interface and the content dataset (IDS) associated with that dataset address is loaded by the user interface and stored for the comparison.

16. An arrangement for establishing and updating a user interface allowing data pages (IS) in a data network to be accessed by a user,
- with elements for accessing the data pages (IS) being arranged on the user interface,
- with a portal server (PRT) for administering the user interface being arranged in the data network,
- with a content being accessible via each of the data pages (IS) and the data pages being stored on a web server (WS),
- with a proxy server (PXY) which loads the data pages accessed by the elements on the user interface from the web server (WS) and transmits them to the user being disposed in the data network.
wherein
- a content dataset (IDS) which describes the content accessible via the respective data page (IS) is stored on the web server (WS) for each of the data pages (IS),
- the content dataset (IDS) is accessible through the portal server (PRT),
- a user dataset which describes a content searched by the user is stored on the portal server (PRT),
- the portal server (PRT) comprises a comparator which compares content datasets (IDS) with the user dataset in regard to their degree of correspondence, and
- the portal server (PRT) is configured in such a way that elements on the user interface display those data pages (IS) in which the result of the comparison reaches and / or exceeds a predefined minimum correspondence.

## Revendications

1. Procédé servant à mettre en place et à mettre à jour une interface d'utilisateur aux fins de l'accès par un utilisateur à des pages d'information (IS) dans un réseau de données,
sachant que respectivement un élément d'affichage sur l'interface d'utilisateur permet à l'utilisateur d'accéder à des pages d'information (IS) sélectionnées et que l'accès aux pages d'information (IS) est effectué respectivement par l'accès à l'élément d'affichage respectif, et
sachant que des contenus sont enregistrés sur les pages d'information (IS),
**caractérisé en ce**
- **que**, pour obtenir les pages d'information (IS), respectivement un jeu de données de contenu (IDS) associé est créé, dans lequel sont enregistrées des caractéristiques décrivant le contenu respectif enregistré sur la page d'information (IS),
- **qu'**un jeu de données d'utilisateur présentant des caractéristiques permettant de décrire un contenu recherché est créé afin de déterminer les pages d'information (IS) sélectionnées,
- **que** les jeux de données de contenu (IDS) sont respectivement comparés au jeu de données d'utilisateur concernant le degré de concordance, et
- **que** de telles pages d'information (IS) sont affichées sur l'interface d'utilisateur en tant que pages d'information sélectionnées (IS) par des éléments d'affichage, dans le cas desquelles le degré de concordance du jeu de données de contenu (IDS) respectif atteint et/ou dépasse avec le jeu de données d'utilisateur un seuil défini au préalable.

2. Procédé selon la revendication 1,
**caractérisé en ce**
**que** les pages d'information (IS) sélectionnées sont vérifiées de manière cyclique concernant leur accessibilité, et
**que** dans les cas où l'une des pages d'information vérifiées n'est plus accessible, l'élément d'affichage de ladite page d'information (IS) est supprimé de l'interface d'utilisateur.

3. Procédé selon l'une quelconque des revendications précédentes,
**caractérisé en ce**
**que** la comparaison est répétée à des intervalles de temps, et
**que** l'interface d'utilisateur est mise à jour à l'aide du résultat de la comparaison répétée.

4. Procédé selon l'une quelconque des revendications précédentes,
**caractérisé en ce**
**que** le jeu de données d'utilisateur est mis à jour,
**qu'**on exécute à nouveau la comparaison à l'issue de la mise à jour, et
**que** les pages d'information sélectionnées sont déterminées à nouveau à l'aide du nouveau résultat de comparaison.

5. Procédé selon l'une quelconque des revendications précédentes,
**caractérisé en ce**
**qu'**on détermine et on enregistre des jeux de données de contenu en interrogeant une base de données comprenant des jeux de données de contenu (IDS) et/ou par une recherche, et
**que** ces derniers sont utilisés pour la comparaison avec le jeu de données d'utilisateur.

6. Procédé selon l'une quelconque des revendications précédentes,
**caractérisé en ce**
**que** chaque jeu de données de contenu (IDS) et le jeu de données d'utilisateur sont créés respectivement sous la forme d'un document structuré, et
**que** le jeu de données de contenu (IDS) comprend l'adresse de la page d'information (IS) qui lui est associée.

7. Procédé selon la revendication 6,
**caractérisé en ce**
**que** chaque jeu de données de contenu (IDS) et le jeu de données d'utilisateur sont créés au format .xml, et
**que** la structure des jeux de données de contenu (IDS) et la structure du jeu de données d'utilisateur sont respectivement fixées dans un jeu de données de description.

8. Procédé selon l'une quelconque des revendications 6 ou 7,
**caractérisé en ce**
**qu'**on utilise respectivement la même structure pour les jeux de données de contenu (IDS) et pour le jeu de données d'utilisateur.

9. Procédé selon l'une quelconque des revendications précédentes,
**caractérisé en ce**
**que** la page d'information (IS) sélectionnée la plus utilisée jusqu'ici est affichée sur l'interface d'utilisateur en un emplacement prioritaire.

10. Procédé selon l'une quelconque des revendications précédentes,
**caractérisé en ce**
**que** la page d'information (IS) sélectionnée, dont le jeu de données de contenu (IDS) associé présente la meilleure concordance avec le jeu de données d'utilisateur, est affichée sur l'interface d'utilisateur en un emplacement prioritaire.

11. Procédé selon l'une quelconque des revendications précédentes,
**caractérisé en ce**
**qu'**on utilise en tant que pages d'information (IS) des pages Web,
**que** les pages Web sont accessibles à l'aide desdites adresses associées,
**que** les pages Web et les jeux de données de contenu (IDS) sont enregistrés sur au moins un serveur Web (WS), et
**que** les jeux de données de contenu (IDS) sont appelés à l'aide desdites adresses de jeu de données associées respectivement auxdits jeux de données de contenu.

12. Procédé selon l'une quelconque des revendications précédentes,
**caractérisé en ce**
**qu'**on utilise en tant qu'interface d'utilisateur, une page d'information réalisée sous la forme d'une page de portail, et
**que** la page de portail est fournie par un serveur de
portail (PRT).

13. Procédé selon l'une quelconque des revendications précédentes,
**caractérisé en ce**
**qu'**on utilise dans le réseau de données un serveur proxy (PXY),
**que** le serveur proxy (PXY) lit les pages d'information (IS), les adresses associées desdites pages d'information étant transmises au serveur proxy, et
**que** le serveur proxy (PXY) enregistre de manière temporaire les pages d'information (IS) lues et les transfère à l'utilisateur.

14. Procédé selon la revendication 13,
**caractérisé en ce**
**que** les éléments d'affichage des pages d'information (IS) sélectionnées sont réalisés sous la forme d'un lien, qui est relié à l'adresse de la page d'information (IS) respectivement sélectionnée,
**que** l'adresse de la page d'information (IS) associée est transmise, lors de l'accès au lien, au serveur proxy (PXY), et
en ce que le serveur proxy (PXY) charge ladite page d'information (IS) et la transfère à l'utilisateur.

15. Procédé selon la revendication 14,
**caractérisé en ce**
**que** lors de la transmission de la page d'information (IS) au serveur proxy (PXY), l'adresse de jeu de données du jeu de données de contenu (IDS) associé à ladite page d'information (IS) est transmise de la même manière au serveur proxy (PXY),
**que** le serveur proxy (PXY) transmet ladite adresse de jeu de données à l'interface d'utilisateur,
**que** le jeu de données de contenu (IDS) associé à ladite adresse de jeu de données est chargé par l'interface d'utilisateur et est enregistré pour la comparaison.

16. Ensemble servant à mettre en place et à mettre à jour une interface d'utilisateur aux fins de l'accès par un utilisateur aux pages d'information (IS) dans un réseau de données, sachant
- que des éléments servant à accéder aux pages d'information (IS) sont disposés sur l'interface d'utilisateur,
- qu'un serveur de portail (PRT) servant à l'administration de l'interface d'utilisateur est disposé dans le réseau de données,
- qu'il est possible d'accéder, par l'intermédiaire des pages d'information (IS), respectivement à un contenu, et que les pages d'information sont enregistrées sur un serveur Web (WS),
- qu'un serveur proxy (PXY) est disposé dans le réseau de données, lequel serveur proxy charge les pages d'information rendues accessibles par l'intermédiaire des éléments de la surface d'utilisateur en provenance du serveur Web (WS) et les transfère à l'utilisateur, **caractérisé en ce**
- **qu'**un jeu de données de contenu (IDS) est enregistré respectivement pour les pages d'information (IS) sur le serveur Web (WS), ledit jeu de données de contenu décrivant le contenu accessible par l'intermédiaire de la page d'information (IS) respective,
- **que** le serveur de portail (PRT) peut accéder au jeu de données de contenu (IDS),
- **qu'**un jeu de données d'utilisateur est enregistré sur le serveur de portail (PRT), ledit jeu de données décrivant un contenu recherché par l'utilisateur,
- **que** le serveur de portail (PRT) présente un équipement de comparaison, qui compare des jeux de données de contenu (IDS) au jeu de données d'utilisateur concernant le degré de concordance, et
- **que** le serveur de portail (PRT) est configuré de telle sorte que de telles pages d'information (IS) sont affichées par des éléments sur l'interface d'utilisateur, pour lesquelles le résultat de comparaison atteint et/ou dépasse une concordance minimale définie au préalable.
